(19) Europäisches Patentamt / European Patent Office / Office européen des brevets

(11) EP 4 308 520 B1

(12) EUROPÄISCHE PATENTSCHRIFT

(45) Veröffentlichungstag und Bekanntmachung des Hinweises auf die Patenterteilung:
**15.01.2025 Patentblatt 2025/03**

(21) Anmeldenummer: **22711936.9**

(22) Anmeldetag: **04.03.2022**

(51) Internationale Patentklassifikation (IPC):
***C04B 26/16*** $^{(2006.01)}$ ***C08G 18/28*** $^{(2006.01)}$
***C08G 18/38*** $^{(2006.01)}$ ***C08G 18/79*** $^{(2006.01)}$
***C08L 75/00*** $^{(2006.01)}$

(52) Gemeinsame Patentklassifikation (CPC):
(C-Sets verfügbar)
**C08G 18/792; C04B 40/0666; C08G 18/289; C08G 18/3868; C08L 75/00;** C04B 2111/00715
(Forts.)

(86) Internationale Anmeldenummer:
**PCT/EP2022/055589**

(87) Internationale Veröffentlichungsnummer:
**WO 2022/194574 (22.09.2022 Gazette 2022/38)**

# (54) CHEMISCHER DÜBEL AUF ISOCYANAT-AMIN-BASIS MIT VERBESSERTER LEISTUNG UND DESSEN VERWENDUNG

ISOCYANATE-AMINO-BASED CHEMICAL DOWEL WITH IMPROVED PERFORMANCE AND ITS USE

CHEVILLE CHIMIQUE À BASE D'ISOCYANATE AMINE À PERFORMANCE AMÉLIORÉE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2021 EP 21162925**

(43) Veröffentlichungstag der Anmeldung:
**24.01.2024 Patentblatt 2024/04**

(73) Patentinhaber: **Hilti Aktiengesellschaft
9494 Schaan (LI)**

(72) Erfinder:
- **KUMRU, Memet-Emin
86199 Augsburg (DE)**
- **PLENK, Christian
86916 Kaufering (DE)**
- **BÜRGEL, Thomas
86899 Landsberg (DE)**

(74) Vertreter: **Hilti Aktiengesellschaft
Corporate Intellectual Property
Feldkircherstrasse 100
Postfach 333
9494 Schaan (LI)**

(56) Entgegenhaltungen:
**EP-A1- 3 447 078**
**WO-A1-2011/113533**
**DE-A1- 102015 109 125**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C04B 40/0666, C04B 24/121, C04B 24/40, C04B 26/16;**
**C04B 40/0666, C04B 24/121, C04B 24/42, C04B 26/16;**
**C08L 75/00, C08K 3/34, C08K 3/36, C08K 5/0091, C08L 83/04;**
**C08L 75/00, C08K 3/34, C08K 3/36, C08L 83/04**

## Beschreibung

Die vorliegende Erfindung betrifft ein Mehrkomponenten-Harzsystem zur Herstellung einer Mörtelmasse auf Basis von Isocyanat-Amin-Addukten zur chemischen Befestigung von Konstruktionselementen. Die Erfindung umfasst ferner eine Mörtelmasse auf Basis von Isocyanat-Amin-Addukten hergestellt aus dem Mehrkomponenten-Harzsystem. Gegenstand der vorliegenden Erfindung ist auch ein Verfahren sowie die Verwendung einer Mörtelmasse auf Basis der Isocyanat-Amin-Addukte zur chemischen Befestigung von Konstruktionselementen in mineralischen Untergründen.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Es ist weiter bekannt, dass die mechanischen Eigenschaften der ausgehärteten Mörtelmasse wesentlich durch die Qualität der Bohrlochreinigung und der Feuchtigkeit des mineralischen Untergrunds beeinflusst wird. In feuchten und/oder nur schlecht von Bohrstaub gereinigten Bohrlöchern tritt eine erhebliche Leistungsabnahme ein, die sich in verringerten Lastwerten der ausgehärteten Mörtelmasse zeigt.

Neben der Weiterentwicklung und Verbesserung der bestehenden Bindemittelsysteme, bestehen daher auch Bestrebungen andere als die vorgenannten Bindemittelsysteme in Bezug auf ihre Eignung als Basis für Mörtelmassen zur chemischen Befestigung zu untersuchen. So beschreibt die EP 3 447 078 A1 einen chemischen Dübel, der aus einer Mehrkomponentenmasse hergestellt wird, welcher eine Polyisocyanatkomponente und eine Polyasparaginsäureesterkomponente umfasst. Bei Vermischen der beiden Komponenten entsteht in einer Polyadditionsreaktion Polyharnstoff, welcher das Bindemittel der Mörtelmasse bildet.

Die WO 2011/113533 A1 betrifft ein Befestigungsmörtelsystem zum Einmörteln von Verankerungsmitteln auf der Basis von ein oder mehreren härtenden Reaktivharzen auf Epoxidbasis in Löcher oder Spalten, welches ein oder mehrere Silane enthält, die gegebenenfalls zur Teilnahme an der Polymerisierung mit dem Reaktivharz auf Epoxidbasis befähigte reaktive Gruppen und in jedem Falle siliziumgebundene hydrolysierbare Gruppen aufweisen. Als siliziumgebundene hydrolysierbare Gruppen in den ein oder mehreren Silanen werden Halogen-, Ketoximat-, Amino-, Aminoxy-, Mercapto-, Acyloxy-, Aryloxy-, Aralkyloxy- und insbesondere Alkyloxygruppen verwendet.

Die DE 10 2015 109 125 A1 betrifft eine Härterzusammensetzung für ein durch Additionspolymerisation härtbares Kunstmörtelsystem zum Einmörteln von Verankerungsmitteln in Löcher oder Spalten, wobei die Härterzusammensetzung oligomere Siloxane beinhaltet, die im Durchschnitt pro Molekül mindestens einen organischen Rest aufweisen. Der organische Rest trägt eine oder mehrere bei der Additionsreaktion mit Isocyanat- oder Epoxygruppen reaktive sekundäre und/oder primäre Amino- und/oder Thiolgruppen. Ferner weisen die Siloxane noch ein oder mehr hydrolysierbare, an Silizium gebundene Gruppen auf. Die Härterzusammensetzung kann daneben ein oder mehrere weitere übliche Zusätze beinhalten.

Diese im Stand der Technik bekannten Mörtelmassen zeigen bereits eine Verbesserung der Lastwerte in feuchten Bohrlöchern, aber kaum in trockenen Bohrlöchern. Die Herstellung der im Stand der Technik verwendeten Silan- und Siloxanadditive ist jedoch aufwendig und kostenintensiv. Ferner haben monomere Silane mit hydrolysierbaren und insbesondere siliziumgebundenen Gruppen den Nachteil, dass sie bei der Hydrolyse während der Verwendung enorme Mengen an flüchtigen organischen Verbindungen (VOC), beispielsweise Alkohole, freisetzen und in der Herstellung aufwendig und kostenintensiv sind.

Gegenüber dem bekannten Stand der Technik besteht somit Bedarf an Zweikomponenten-Mörtelmassen mit guter Haftung in trockenen Bohrlöchern, insbesondere in gut gereinigten Bohrlöchern, die einfach zu verarbeiten sind und Additive enthalten, die einfach in der Herstellung und kostengünstig sind.

Die der Erfindung zugrundeliegenden Aufgabe wird durch Bereitstellung eines Mehrkomponenten-Harzsystems gemäß Anspruch 1 gelöst. Bevorzugte Ausführungsformen des erfindungsgemäßen Mehrkomponenten-Harzsystems sind in den Unteransprüchen angegeben, welche wahlweise miteinander kombiniert werden können.

Gegenstand der Erfindung ist ferner eine Mörtelmasse zur chemischen Befestigung von Konstruktionselementen gemäß Anspruch 23 hergestellt aus dem erfindungsgemäßen Mehrkomponenten-Harzsystem.

Gegenstand der Erfindung ist auch ein Verfahren zur chemischen Befestigung von Konstruktionselementen in mineralischen Untergründen gemäß Anspruch 24 sowie die Verwendung des erfindungsgemäßen Mehrkomponenten-Harzsystems bzw. der daraus hergestellten Mörtelmasse zur chemischen Befestigung von Konstruktionselementen in mineralischen Untergründen gemäß Anspruch 25.

Ein erster Gegenstand der Erfindung ist ein Mehrkomponenten-Harzsystem enthaltend eine Isocyanatkomponente, die mindestens ein aliphatisches und/oder aromatisches Polyisocyanat mit einer mittleren NCO-Funktionalität von 2 oder größer umfasst, und eine Aminkomponente, die mindestens ein gegenüber Isocyanatgruppen reaktives Amin mit einer mittleren NH-Funktionalität von 2 oder größer umfasst, mit der Maßgabe, dass das Mehrkomponenten-Harzsystem frei von Polyasparaginsäureestern ist, wobei die Isocyanatkomponente und/oder die Aminkomponente mindestens einen Füllstoff sowie mindestens ein Rheologieadditiv umfasst und der Gesamtfüllgrad einer Mörtelmasse hergestellt durch Vermischen der Isocyanatkomponente und der Aminkomponente in einem Bereich von 30 bis 80 % liegt, das dadurch gekennzeichnet ist, dass die Isocyanatkomponente und/oder die Aminkomponente mindestens ein Additiv enthält, wobei das Additiv

- eine Verbindung der Formel I

$$A_n(L)_m(X)_p \qquad \text{(Formel I)},$$

wobei

A für Phosphor, Bor, Aluminium, Titan oder Zirkonium steht,
X gleich oder verschieden sein kann und für einen Alkoxy-, Aryloxy- oder Acyloxyrest steht,
L gleich oder verschieden sein kann und für wenigstens einen Liganden steht,
n für die Wertigkeit von A steht, und
p eine ganze Zahl von 1 bis n bedeutet.
m 0 oder eine ganze Zahl von 1 bis n-1 bedeutet und
n = m+p ist,

oder

- ein Siloxan, welches mindestens einen funktionellen Rest aufweist, der zur Additionsreaktion an Isocyanate befähigt ist, jedoch keine an ein Siliziumatom gebundene hydrolysierbare Gruppen aufweist, ist.

Es hat sich überraschenderweise herausgestellt, dass die Verwendung von Organometallverbindungen der Formel I oder von Siloxanen als Additive in chemischen Dübeln auf Isocyanat-Amin-Basis die Verbundspannungen im trockenen Beton genauso wie Silane mit an ein Siliziumatom gebundene hydrolysierbare Gruppen erhöhen.

Erfindungswesentlich ist ferner, dass das Mehrkomponenten-Harzsystem und insbesondere die Aminkomponente des Mehrkomponenten-Harzsystems frei von Polyasparaginsäureestern ist. Der Ausdruck *"frei von Polyasparaginsäureestern"* im Sinne der vorliegenden Anmeldung bedeutet, dass der Anteil an Polyasparaginsäureestern im Mehrkomponenten-Harzsystem bevorzugt geringer als 2 Gew.-%, weiter bevorzugt geringer als 0,5 Gew.-% und noch weiter bevorzugt geringer als 0,1 Gew.-% ist, jeweils bezogen auf das Gesamtgewicht des Mehrkomponenten-Harzsystems. Die Anwesenheit von Polyasparaginsäureestern in den vorgenannten gewichtsprozentualen Bereichen kann auf potentielle Verunreinigungen zurückgeführt werden. Besonders bevorzugt liegt der Anteil an Polyasparaginsäureestern im Mehrkomponenten-Harzsystem jedoch bei 0,0 Gew.-% bezogen auf das Gesamtgewicht des Mehrkomponenten-Harzsystems.

Zum besseren Verständnis der Erfindung werden die folgenden Erläuterungen der hierin verwendeten Terminologie als sinnvoll erachtet. Im Sinne der Erfindung bedeutet:

- *'Mehrkomponenten-Harzsystem"* ein Reaktionsharzsystem, das mehrere voneinander getrennt gelagerte Komponenten umfasst, im Allgemeinen eine Harzkomponenten und eine Härterkomponente, so dass eine Härtung erst nach dem Mischen aller Komponenten erfolgt.

- *"Isocyanate"* sind Verbindungen, die eine funktionelle Isocyanatgruppe -N=C=O aufweisen und durch die Struktureinheit R-N=C=O charakterisiert werden.

- *"Polyisocyanate"* sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert und haben damit eine NCO-Funktionalität von 2.

- *"mittlere NCO-Funktionalität",* beschreibt die Anzahl an Isocyanatgruppen in der Verbindung; bei einer Mischung aus Isocyanaten beschreibt die "gemittelte NCO-Funktionalität" die gemittelte Anzahl an Isocyanatgruppen in der Mischung und wird nach der Formel: gemittelte NCO-Funktionalität (Mischung) = Σ mittlere NCO-Funktionalität (Isocyanat i) / $n_i$, also die Summe der mittleren NCO-Funktionalität der Einzelkomponente geteilt durch die Anzahl der Einzelkomponenten, ermittelt.

- *"Isocyanatkomponente"* oder auch A-Komponente, beschreibt eine Komponente des Mehrkomponenten-Harzsystems, welche mindestens ein Polyisocyanat und ggf. mindestens einen Füllstoff und/oder mindestens ein Rheologieadditiv und/oder weitere Additive umfasst.

- *"Amine"* sind Verbindungen mit einer funktionellen NH-Gruppe, die durch Austausch von einem oder zwei Wasserstoffatomen durch Kohlenwasserstoffgruppen aus Ammoniak abgeleitet sind und die allgemeinen Strukturen $RNH_2$ (primäre Amine) und $R_2NH$ (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)). Von dem Begriff der Amine im Sinne der vorliegenden Erfindungen ist die Verbindungsklasse der Polyasparaginsäureester explizit ausgeschlossen. Diese werden separat unter dem Begriff der Polyasparaginsäureester definiert.

- *"NH-Funktionalität"* beschreibt die Anzahl aktiver Wasserstoffatome, die mit einer Isocyanatgruppe reagieren können, in einer Aminogruppe.

- *"mittlere NH-Funktionalität"* beschreibt die Anzahl aktiver Wasserstoffatome, die mit einer Isocyanatgruppe reagieren können, in einem Amin und ergibt sich aus der Anzahl und NH-Funktionalität der in der Verbindung, dem Amin, enthaltenen Aminogruppen; bei einer Mischung aus Aminen beschreibt die "gemittelte NH-Funktionalität" die gemittelte Anzahl an aktiven Wasserstoffatomen in der Mischung und wird nach der Formel: gemittelte NH-Funktionalität (Mischung) = Σ mittlere NH-Funktionalität (Amin i) / $n_i$, also die Summe der mittleren NH-Funktionalität der Einzelkomponente geteilt durch die Anzahl der Einzelkomponenten, ermittelt.

- "Polyasparaginsäureester" bezeichnet Verbindungen der allgemeinen Formel:

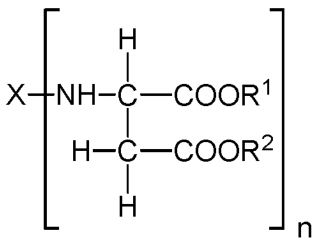

in der

$R^1$ und $R^2$ gleich oder verschieden sein können und einen organischen Rest bedeuten, der gegenüber Isocyanatgruppen inert ist,
X einen n-wertigen organischen Rest bedeutet, der gegenüber Isocyanatgruppen inert ist, und
n eine ganze Zahl von mindestens 2 bedeutet, bevorzugt von 2 bis 6, weiter bevorzugt von 2 bis 4 und besonders bevorzugt 2 bedeutet.

- *"Aminkomponente"* oder auch B-Komponente, beschreibt eine Komponente des Mehrkomponenten-Harzsystems, welche mindestens ein Amin und ggf. mindestens einen Füllstoff und/oder mindestens ein Rheologieadditiv und/oder weitere Additive umfasst.

- *"Isocyanat-Amin-Addukte"* sind Polymere, die durch Polyadditionsreaktion von Isocyanaten mit Aminen entstehen. Bevorzugt handelt es sich bei den erfindungsgemäßen Isocyanat-Amin-Addukten um Polyharnstoffe, welche mindestens ein Strukturelement der Form -[-NH-R-NH--NH-R’-NH-] aufweisen.

- *"aliphatische Verbindungen"* sind acyclische oder cyclische, gesättigte oder ungesättigte Kohlenstoffverbindungen, ausgenommen aromatische Verbindungen.

- *"alicyclische Verbindungen"* sind Verbindungen mit einer carbocyclischen Ringstruktur, ausgenommen Benzolderivate oder andere aromatische Systeme.

- *"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist.

- *"aromatische Verbindungen"* sind Verbindungen, die der Hückel (4n+2)-Regel folgen.

- *"zweikomponentiges Reaktionsharzsystem"* bedeutet ein Reaktionsharzsystem, das zwei voneinander getrennt gelagerte Komponenten, im vorliegenden Fall eine Isocyanatkomponente und eine Aminkomponente, umfasst, so dass eine Härtung erst nach dem Mischen der beiden Komponenten erfolgt.

- *"Mörtelmasse"* bezeichnet die Zusammensetzung, die durch Mischen der Isocyanatkomponente und der Aminkomponente erhalten wird und als solches direkt zur chemischen Befestigung verwendet werden kann.

- *"Füllstoff"* bezeichnet eine organische oder anorganische, insbesondere anorganische Verbindung.

- *"Rheologieadditiv"* bezeichnet Additive, welche in der Lage sind, das Viskositätsverhalten der Isocyanatkomponente, der Aminkomponente und des Mehrkomponenten-Harzsystems bei der Lagerung, der Applikation und/oder bei der Aushärtung zu beeinflussen. Das Rheologieadditiv verhindert u.a. eine Sedimentation der Füllstoffe in der Polyisocyanatkomponente und/oder der Aminkomponente. Ferner verbessert es die Mischbarkeit der Komponenten und verhindert eine mögliche Phasenseparation.

- *"Temperaturrobustheit"* bezeichnet die Änderung der Verbundspannung einer ausgehärteten Mörtelmasse bei einer erhöhten Temperatur im Vergleich zur Referenzverbundspannung. Im Rahmen der vorliegenden Erfindung wird die Temperaturrobustheit insbesondere als das Verhältnis der Verbundspannung bei 80 °C zur Referenzverspannung angegeben.

- *"ein", "eine", "einer"* als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können.

- *"mindestens ein", "mindestens eine", "mindestens einer"* zahlenmäßig *"ein oder mehrere";* in einer bevorzugten Ausführungsform ist mit diesem Begriff zahlenmäßig *"ein", "eine", "einer"* gemeint.

- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"; "bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden in der zum Anmeldetag dieser Anmeldung aktuellen Ausgabe verwendet.

*Isocyanatverbindungen*

Das erfindungsgemäße Mehrkomponenten-Harzsystem umfasst mindestens eine Isocyanatkomponente und mindestens eine Aminkomponente. Die Isocyanatkomponente und die Aminkomponente liegen vor der Anwendung reaktionsinhibierend getrennt voneinander vor.

Die Isocyanatkomponente umfasst mindestens ein Polyisocyanat. Als Polyisocyanat können alle dem Fachmann bekannten aliphatischen und/oder aromatischen Isocyanate mit einer mittleren NCO-Funktionalität von 2 oder größer, einzeln oder in beliebigen Mischungen untereinander, verwendet werden. Die mittlere NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Geeignete aromatische Polyisocyanate sind solche mit aromatisch gebundenen Isocyanatgruppen, wie Diisocyanatobenzole, Toluoldiisocyanate, Diphenyldiisocyanate, Diphenylmethandiisocyanate, Diisocyanatonaphthaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 1,3-Phenylendiisocyanat, 1,4-Phenylendiisocyanat, 2,4-Toluylendiisocyanat, 2,5-Toluylendiisocyanat 2,6-Toluylendiisocyanat, 1,3-Xylylendiisocyanat, 1,4-Xylylendiisocyanat Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-m-phenylendiisocyanat, 2,4,6-Trimethyl-1,3-phenylendiisocyanat, Xylylendiisocyanat, 1,5-Naphthylendiisocyanat, 3,3'-Dimethyl-4,4'-biphenyldiisocyanat, 3,3'-Dimethoxy-4,4'-biphenyldiisocyanat, 3,3'-Dimethyl-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(p-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-m-phenylendiisocyanat, 4-[(3-isocyanato-4-methylphenyl)methyl]-m-phenylendiisocyanat, 2,2'-Methylen-bis[6-(o-isocyanatobenzyl)phenyl]diisocyanat.

Bevorzugt werden aliphatische Isocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen. Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5-diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane ($H_6XDI$), 3-Isocyanatomethyl-3,5,5-trimethylcyclohexylisocyanat (Isophorondiisocyanat, IPDI), Bis-(4-isocyanatocyclohexyl)methan ($H_{12}MDI$), Bis-(isocyanatomethyl)norbornan (NBDI) oder 3(4)-Isocyanatomethyl-1-methyl-cyclohexylisocyanat (IMCI), Octagydro-4,7-methano-1H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Besonders bevorzugte Isocyanate sind Hexamethylendiisocyanat (HDI), Trimethyl-HDI (TMDI), Pentandiisocyanat (PDI) 2-Methylpentan-1,5-diisocyanat (MPDI), Isophorondiisocyanat (IPDI), 1,3- sowie 1,4-Bis(isocyanatomethyl) cyclohexan ($H_6XDI$), Bis(isocyanatomethyl)norbornan (NBDI), 3(4)-Isocyanatomethyl-1-methyl-cyclohexylisocyanat (IMCI) und/oder 4,4'-Bis(iso- cyanatocyclohexyl)methan ($H_{12}MDI$) oder Gemische dieser Isocyanate.

Noch weiter bevorzugt liegen die Polyisocyanate als Präpolymere, Biurete, Isocyanurate, Iminooxadiazindione, Uretdione und/oder Allophanate vor, die durch Oligomerisierung von difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen.

Beispiele für geeignete, kommerziell erhältliche Isocyanate sind Desmodur@ N 3900, Desmodur® N 100, Desmodur@ Ultra N 3200, Desmodur@ Ultra N 3300, Desmodur@ Ultra N 3600, Desmodur® N 3800, Desmodur® XP 2675, Desmodur® 2714, Desmodur® 2731, Desmodur® N 3400, Desmodur® XP 2679, Desmodur® XP 2731, Desmodur® XP 2489, Desmodur® E 3370, Desmodur® XP 2599, Desmodur® XP 2617, Desmodur@ XP 2406, Desmodur@ XP 2551, Desmodur@ XP 2838, Desmodur@ XP 2840, Desmodur@ VL, Desmodur® VL 50, Desmodur@ VL 51, Desmodur@ ultra N 3300, Desmodur@ eco N 7300, Desmodur® E23, Desmodur® E XP 2727, Desmodur® E 30600, Desmodur® E 2863 XPDesmodur® H, Desmodur@ VKS 20 F, Desmodur® 44V20I, Desmodur® 44P01, Desmodur® 44V70 L, Desmodur® N3400, Desmodur® N3500 (jeweils erhältlich von Covestro AG), Tolonate™ HDB, Tolonate™ HDB-LV, Tolonate™ HDT, Tolonate™ HDT-LV, Tolonate™ HDT-LV2 (erhältlich von Vencorex), Basonat® HB 100, Basonat® HI 100, Basonat® HI 2000 NG (erhältlich von BASF), Takenate® 500, Takenate® 600, Takenate® D-132N(NS), Stabio® D-376N (jeweils erhältlich von Mitsui), Duranate® 24A-100, Duranate® TPA-100, Duranate® TPH-100 (jeweils erhältlich von Asahi Kasai), Coronate® HXR, Coronate® HXLV, Coronate® HX, Coronate® HK, (jeweils erhältlich von Tosoh).

Eines oder mehrere Polyisocyanate sind vorzugsweise in einem Anteil von 20 bis 100 Gew.-%, bevorzugt in einem Anteil von 30 bis 90 Gew.-% und noch bevorzugter in einem Anteil von 35 bis 65 Gew.-% bezogen auf das Gesamtgewicht der Isocyanatkomponente in der Isocyanatkomponente enthalten.

*Aminverbindungen*

Die Aminkomponente, welche im Mehrkomponenten-Harzsystem reaktionsinhibierend getrennt von der Isocyanatkomponente vorliegt, umfasst mindestens ein gegenüber Isocyanatgruppen reaktives Amin, das eine Aminogruppe, bevorzugt wenigstens zwei Aminogruppen als funktionelle Gruppen umfasst. Erfindungsgemäß weist das Amin eine mittlere NH-Funktionalität von 2 oder größer auf. Die mittlere NH-Funktionalität gibt die Anzahl der an ein Stickstoffatom gebundene Wasserstoffatome in dem Amin an. Demnach weist bspw. ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH-Funktionalität kann sich auch nach den Angaben der Anbieter von

Aminen richtet, wobei die tatsächlich angegebene NH-Funktionalität von der theoretischen mittleren NH-Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindung enthaltenen Aminogruppe(n) handelt. Die Aminogruppen können dabei primäre oder sekundäre Aminogruppen sein. Das Amin kann entweder nur primäre oder nur sekundäre Aminogruppen, oder sowohl primäre als auch sekundäre Aminogruppen enthalten.

Gemäß einer bevorzugten Ausführungsform ist das gegenüber Isocyanat-Gruppen reaktive Amin aus der aus aliphatischen, alicyclischen, araliphatischen und aromatischen Aminen bestehenden Gruppe ausgewählt, besonders bevorzugt aus der aus alicyclischen und aromatischen Aminen bestehenden Gruppe ausgewählt.

Gegenüber Isocyanatgruppen reaktive Amine sind dem Fachmann grundsätzlich bekannt. Beispiele für gegenüber Isocyanatgruppen reaktive geeignete Amin sind im Folgenden angegeben, ohne jedoch den Umfang der Erfindung einzuschränken. Diese können sowohl einzeln als auch in beliebigen Mischungen untereinander verwendet werden. Beispiele sind: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4,7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthio-toluoldiamin, DMTDA) 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (33Dapson), 3,3'-Diaminodiphenylsulfon (Dapson), 4,4'-Diaminodiphenylsulfon (44Dapson), 3,3'-Diaminodiphenylsulfon (Dapson) gemischte polycyclische Amine (MPCA) (z.B. Ancamine 2168), Dimethyldiaminodicyclohexylmethan (Laromin C260), 2,2-Bis(4-aminocyclohexyl) propan, (3(4),8(9)Bis(aminomethyldicyclo[5.2.1.0$^{2,6}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Besonders bevorzugte Amine sind Diethylmethylbenzoldiamin (DETDA), 2,4-Diamino-3,5-dimethylthiotoluol (Dimethylthio-toluoldiamin, DMTDA), 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure® 300), 4,4'-Methylenbis(2,6-diethylanilin), 4,4'-Methylenbis(N-sec-butylcyclohexanamin) (Clearlink® 1000), 3,3'-Diaminodiphenylsulfon (33Dapson), 4,4'-Diaminodiphenylsulfon (44Dapson), N,N'-Di-sec-butyl-p-phenylenediamin und 2,4,6-Trimethyl-m-phenylenediamin, 4,4'-methylenebis(N-(1-methylpropyl)-3,3'-dimethylcyclohexanamine (Clearlink® 3000), das Reaktionsprodukt von 2-Propenenitril mit 3-Amino-1,5,5-trimethylcyclohexanmethanamin (Jefflink® 745) und 3-((3-(((2-Cyanoethyl)amino)methyl)-3,5,5-trimethylcyclohexyl)amino)propiononitrile (Jefflink® 136 oder Baxxodur PC136).

Ganz besonders bevorzugte Amine sind 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure 300), 4,4'-Methylenbis(2,6-diethylanilin), 4,4'-Methylenebis(N-sec-butylcyclohexanamin) (Clearlink 1000), 3,3'-Diaminodiphenylsulfon (Dapson), N,N'-Di-sec-butyl-p-phenylenediamin und 2,4,6-Trimethyl-m-phenylenediamin.

Eines oder mehrere Amine sind vorzugsweise in einem Anteil von 20 bis 100 Gew.-%, bevorzugt in einem Anteil von 30 bis 70 Gew.-% und noch bevorzugter in einem Anteil von 35 bis 70 Gew.-% bezogen auf das Gesamtgewicht der Aminkomponente in der Aminkomponente enthalten.

Die Mengenverhältnisse des Polyisocyanats und des Amins werden bevorzugt so gewählt, dass das Verhältnis von mittlerer NCO-Funktionalität des Polyisocyanats zu mittlerer NH-Funktionalität des Amins zwischen 0,3 und 2,0 liegt, bevorzugt zwischen 0,5 und 1,8, weiter bevorzugt zwischen 0,5 und 1,5, noch weiter bevorzugt zwischen 0,7 und 1,5 und noch weiter bevorzugt 0,7 bis 1,3.

Zur Einstellung der Geschwindigkeit der Aushärtung kann eine Mischung unterschiedliche Isocyanate und/oder unterschiedliche Amine verwendet werden. In diesem Fall werden deren Mengenverhältnisse so gewählt, dass das Verhältnis der gemittelten NCO-Funktionalität der Isocyanatmischung zu der gemittelten NH-Funktionalität der Aminmischung zwischen 0,3 und 2,0 liegt, bevorzugt zwischen 0,5 und 1,8, weiter bevorzugt zwischen 0,5 und 1,5, weiter bevorzugt zwischen 0,7 und 1,5 und noch weiter bevorzugt zwischen 0,7 und 1,3.

*Füllstoffe und Additive*

Erfindungsgemäß enthält das Mehrkomponenten-Harzsystem als Additiv eine Verbindung der Formel I $A_n(L)_m$

$(X)_p$ oder ein Siloxan, welches mindestens einen funktionellen Rest aufweist, der zur Additionsreaktion an Isocyanatgruppen befähigt ist, jedoch keine an ein Siliziumatom gebundene hydrolysierbare Gruppen aufweist, insbesondere keine Alkoxyreste.

Das erfindungsgemäße Additiv kann einzeln oder auch als Gemisch von Additiven vorliegen.

Die erfindungsgemäßen Additive machen den Einsatz von Silanen oder Siloxanen mit siliziumgebundenen hydrolysierbaren Resten überflüssig oder können die bekannten hydrolysierbaren Silane und Siloxanoligomere ganz oder teilweise ersetzen. Diese führt überraschenderweise zu einer guten und schnellen Aushärtung der chemischen Mörtel auch an der Grenzfläche, trotz der Abwesenheit von siliziumgebundenen substituierten Resten.

Mit den erfindungsgemäßen Additiven ist in trockenem Beton für hammergebohrte und diamantgebohrte Bohrlöcher, insbesondere für gut gereinigte Bohrlöcher eine Verbesserung der Mörtelleistung im Vergleich zu Mörtelmassen ohne entsprechende Additive möglich. Die Befestigung von Bauteilen unter Verwendung des erfindungsgemäßen Mehrkomponenten-Harzsystems ergibt bei trockenen gereinigten Bohrlöchern hohe Lastwerte, die gegenüber siloxanfreien oder zum Teil auch silanhaltigen Massen erhöht sind, ohne auf Silane oder Siloxanoligomere des Stands der Technik zurückzugreifen.

Überraschenderweise wurde gefunden, dass bei schon bei geringen Additivanteilen in den Mörtelmassen eine verbesserte Anhaftung des ausgehärteten Mörtels an der Betonoberfläche sowie verbesserte Lastwerte von eingegossenen, im Baubereich üblicherweise verwendeten Befestigungsmittel, wie beispielsweise Dübel, Anker, Gewindeschrauben und Bolzen in feuchtem und trockenem Beton erreicht werden können.

Erfindungsgemäß enthält das Mehrkomponenten-Harzsystem in einer ersten Alternative als Additiv eine Verbindung der Formel I

$$A_n(L)_m(X)_p \qquad \text{(Formel I)}$$

wobei

A für Phosphor, Bor, Aluminium, Titan oder Zirkonium steht,
X gleich oder verschieden sein kann und für einen Alkoxy-, Aryloxy- oder Acyloxyrest steht,
L gleich oder verschieden sein kann und für wenigstens einen Liganden steht,
n für die Wertigkeit von A steht, und
p eine ganze Zahl von 1 bis n bedeutet.
m 0 oder eine ganze Zahl von 1 bis n-1 bedeutet und
n = m+p ist.

Der Ligand L kann aus der Gruppe bestehend aus Acetoacetat, Alkyl, Halogenid, Phosphat, Pyrophosphat, Phosphit, Sulfat, Sulfit, CN, Cyclopentadienyl und Pentamethylcyclopentadienyl, Ether, wie Tetrahydrofuran, Pyridin und Morpholin ausgewählt sein. Von den Begriffen Phosphat, Pyrophosphat, Phosphit, Sulfat und Sulfit sind auch deren Ester und Halbester mit Alkoholen, insbesondere Alkoxyverbindungen mit 1 bis 24 C-atomen umfasst.

In einer bevorzugten Ausführungsform der Verbindung der Formel I

$$A_n(L)_m(X)_p \qquad \text{(Formel I)}$$

steht X für einen Alkoxyrest $-OR^1$ oder einen Acyloxyrest $-O(C=O)R^1$, worin $R^1$ jeweils eine wahlweise substituierte, lineare oder verzweigte Alkylgruppe mit 1 bis 24 C-Atomen bedeutet, bevorzugt mit 1 bis 18 C-Atomen und besonders bevorzugt mit 1 bis 8 C-Atomen.

Besonders bevorzugt steht X für einen Alkoxy- oder Acyloxyrest, der aus der Gruppe bestehend aus $-O-CH_3$, $-O-C_2H_5$, $-O-C_3H_7$, $-O-C_4H_9$, $-O-C_5H_{11}$, $-O-(CO)-CH_3$, $-O-(CO)-C_2H_5$, $-O-(CO)-C_3H_7$, $-O-(CO)-C_4H_9$ und $-O-(CO)-C_5H_{11}$ ausgewählt ist, bevorzugt aus der Gruppe bestehend aus $-O-CH_3$, $-O-C_2H_5$, $-O-C_3H_7$ und $-O-C_4H_9$.

Der Rest X kann gleich oder verschieden sein. In einer bevorzugten Ausführungsform der Erfindung ist X gleich.

Bevorzugt ist m = 0 und n = p.

In einer weiteren bevorzugten Ausführungsform ist die Verbindung der Formel I aus der Gruppe bestehend aus Trimethylphosphat, Triethylphosphat, Triethylborat, Triisopropylborat, Tributylborat, Triethylaluminat, Tetraethyltitanat, Tetraisopropyltitanat, Tetraethylzirkonat, Tetrabutylzirkonat, Tris(isooctadecanoato-o)(propan-2-olato)titanat (CAS No.: 61417-49-0), Isopropyl-dimethacryloylisostearyoyltitanat (CAS No.: 61548-33-2), Tris(dodecylbenzolsulfonat)isopropoxidtitanat (CAS No.: 61417-55-8), Isopropyl-tri(dioctylphosphato)titanat (CAS No.: 65345-34-8), Trimethacrylatmethoxyethoxyethoxidtitanat (CAS No.: 61436-48-4), Isopropyl-titan-tri(dioctylpyrophosphat) (CAS No.: 68585-78-4), Isopropyl-triacryloyltitanat (CAS No.: 61436-49-5), Bis(2-((2-aminoethyl)amino)ethanolato)(2-((2-aminoethyl)amino)ethanolato-O)(propan-2-olato)titanat (CAS No.: 65380-84-9), Tetraisopropoxytitanium (CAS No.: 68585-67-1), Tetraoctyldi(ditridecylphosphite)titanat (CAS No.: 68585-68-2) und Tetra(2,2-diallyloxymethyl-1-butyl)bis(ditridecylphosphite)titanat (CAS No.: 64157-14-8) ausgewählt.

Als komplexe Verbindungen der Formel I geeignet sind insbesondere Isopropyl-tri(dioctylpyrophosphat)-titanat oder Tetraoctyltitanat-bis(di-tridecylphosphit), die unter anderem von Kenrich-Chemicals Inc. erhältlich sind.

In einer bevorzugten Ausführungsform liegt die mindestens eine Verbindung der Formel I in einem Anteil von 0,01 bis 10 Gew.-% vor, weiter bevorzugt in einem Anteil von 0,01 bis 5 Gew.-%, noch weiter bevorzugt in einem Anteil von 0,1 bis 5 Gew.-% und besonders bevorzugt in einem Anteil von 0,1 bis 3 Gew.-%, bezogen auf das Gesamtgewicht des Mehrkomponenten-Harzsystems.

Erfindungsgemäß enthält das Mehrkomponenten-Harzsystem in einer zweiten Alternative als Additiv mindestens ein Siloxan, welches mindestens einen funktionellen Rest aufweist, der zur Additionsreaktion an Isocyanatgruppen befähigt ist, jedoch keine an ein Siliziumatom gebundene hydrolysierbare Gruppen aufweist, insbesondere keine Alkoxyreste.

Das erfindungsgemäße Mehrkomponenten-Harzsystem enthält bevorzugt keine Siloxane, mit siliziumgebundenen hydrolysierbaren Gruppen. Unter siliziumgebundenen hydrolysierbaren Gruppen sind Reste wie beispielsweise Halogenatome, Ketoximat-, Amino-, Aminoxy-, Mercapto-, Acyloxy-, Aryloxy-, Aralkyloxy- (= Arylalkoxy-) oder insbesondere Alkyloxy- (Alkoxy-) Reste zu verstehen, die über ein Heteroatom an ein Siliziumatom gebunden sind.

Im Sinne der vorliegenden Erfindung werden unter Siloxanen aus Siloxaneinheiten aufgebaute chemische Verbindungen verstanden. In diesen Siloxaneinheiten sind die Siliziumatome, die durch das Ausbilden von Bindungen zu Sauerstoff ihr Oktett (Elektronenschale) nicht erreichen, mit organischen Resten abgesättigt. Im Gegensatz zu den (Poly) Silanen sind die Siliziumatome nicht untereinander, sondern durch genau ein Sauerstoffatom mit ihrem benachbarten Siliziumatom verknüpft: Si-O-Si.

Eine Siloxaneinheit kann ein bis vier weitere Substituenten aufweisen, je nach Anzahl der frei gebliebenen Valenzen am Sauerstoff: $R_nSiO_{(4-n)/2}$ (n=0, 1, 2, 3), d.h. dass eine Siloxaneinheit ein bis vier weitere Substituenten aufweisen kann, je nach Anzahl der frei gebliebenen Valenzen am Sauerstoff. Die Siloxaneinheiten können also mono-, di-, tri- und tetrafunktionell sein, wobei üblicherweise folgende Abkürzungen verwendet werden: [M] = $R_3SiO_{1/2}$, [D] = $R_2SiO_{2/2}$, [T] = $RSiO_{3/2}$ und [Q] = $SiO_{4/2}$.

Lineare (Poly)siloxane besitzen die Bauform [$MD_nM$], entsprechend der allgemeinen Formel $R_3Si\text{-}[O\text{-}SiR_2]_n\text{-}O\text{-}SiR_3$, wobei R Wasserstoffatome oder organische Gruppen, beispielsweise Alkylgruppen, sein können und n 0 oder eine ganze Zahl darstellt. Ein Beispiel für ein lineares Polysiloxan ist Poly(dimethylsiloxan).

Verzweigte Polysiloxane, die als verzweigende Elemente trifunktionelle oder tetrafunktionelle Siloxaneinheiten aufweisen, haben die Bauform [$M_nD_mT_n$], wobei n und m ganze Zahlen bedeuten. Die Verzweigungsstellen sind dabei entweder in eine Kette oder einen Ring eingebaut. Zyklische Polysiloxane sind ringförmig aus difunktionellen Siloxaneinheiten aufgebaut, mit der Bauform [$D_n$], wobei n eine ganze Zahl größer oder gleich 3 bedeutet. Vernetzte Polysiloxane in dieser Gruppe sind ketten- oder ringförmige Moleküle, welche mit Hilfe von tri- und tetrafunktionellen Siloxaneinheiten zu planaren oder dreidimensionalen Netzwerken verknüpft sind.

Das Siloxangerüst kann verschiedene Kohlenwasserstoffreste beinhalten, und es können an Silizium gebundene funktionelle Gruppen und organofunktionelle Gruppen vorhanden sein. Bei den erfindungsgemäß eigesetzten Siloxanen sind jedoch keine siliziumfunktionellen Gruppen vorhanden. Mit funktionellen Gruppen oder Resten im Sinne der vorliegenden Erfindung sind daher immer organofunktionelle Reste gemeint, das heißt, an Kohlenstoff gebundene funktionelle Reste.

Die erfindungsgemäßen Siloxane machen den Einsatz von Silanen oder Siloxanen mit siliziumgebundenen hydrolysierbaren Resten überflüssig oder können die bekannten hydrosysierbaren Silane und Siloxane ganz oder teilweise ersetzen. Es wird vermutet, dass die erfindungsgemäß eingesetzten Siloxane die Mörteloberfläche ausreichend hydrophobisieren, um die Wasseraufnahme durch den Mörtel oder eine Diffusion von Härtern wie Aminen in die Wasserschicht an der Grenzfläche von Mörtel und Bohrloch zu reduzieren. Diese führt überraschenderweise zu einer guten Aushärtung der chemischen Mörtel auch an der Grenzfläche, trotz der Abwesenheit von siliziumgebundenen hydrolysierbaren Resten.

Mit den erfindungsgemäßen Siloxanen, die frei von hydrolysierbaren siliziumgebundenen Resten sind, ist sowohl in trockenem als auch in wassergesättigtem Beton für hammergebohrte und diamantgebohrte Bohrlöcher eine Verbesserung der Mörtelleistung unter kritischen Bohrlochbedingungen möglich, und zwar ohne die Bildung von unerwünschten VOCs. Die Befestigung von Bauteilen unter Verwendung der erfindungsgemäßen Zweikomponenten-Mörtelmasse ergibt insbesondere bei trockenen gereinigten Bohrlöchern und ganz besonders bei sehr gut gereinigten Bohrlöchern hohe Lastwerte, die gegenüber siloxanfreien oder zum Teil auch silanhaltigen Massen erhöht sind, ohne auf Silane oder Siloxanoligomere des Stands der Technik zurückzugreifen, welche die Umwelt durch Bildung von VOC's belasten.

In einer bevorzugten Ausführungsform enthält die Zweikomponenten-Mörtelmasse mindestens ein Siloxan, welches mindestens einen zur Additionsreaktion mit Isocyanatgruppen befähigten funktionellen terminalen Rest aufweist. Weiter bevorzugt weist das Siloxan zwei oder mehr, gleiche oder verschiedene, besonders bevorzugt zwei gleiche endständige zur Additionsreaktion mit Isocyanatgruppen befähigte funktionelle Reste auf. Durch die Funktionalisierung

der erfindungsgemäßen Siloxane können diese fest in die Polymerstruktur eingebaut werden und gegebenenfalls auch als Härtungsmittel für das Harz dienen, wenn der funktionelle Rest beispielsweise eine Aminogruppe ist.

Bevorzugte zur Additionsreaktion mit Isocyanatgruppen befähigte funktionelle Reste in einer der oben genannten Ausführungsformen der Erfindung sind aus der aus Hydroxy-, Carboxy-, Amino-, sek. Amino-, Mercapto-, Isocyanato-, Alkenyl-, (Meth)acryloyl-, Anhydrido-, Epoxid-, Urethan- und Harnstoff-Resten bestehenden Gruppe ausgewählt, bevorzugt aus der aus Isocyanato- und Aminoresten bestehenden Gruppe.

In einer weiteren bevorzugten Ausführungsform der erfindungsgemäßen Zweikomponenten-Mörtelmasse weist das Siloxan die Struktur $R_3Si\text{-}[O\text{-}Si(R^1)_2]_n\text{-}O\text{-}SiR_3$ auf, wobei n für 0 oder eine ganze Zahl von einschließlich 1 bis 1000 steht, bevorzugt für 0 oder 1 bis 5; R und $R^1$ jeweils unabhängig voneinander für einen gegebenenfalls Heteroatome enthaltenden, gegebenenfalls substituierten und gegebenenfalls mindestens einen zur Additionsreaktion mit Isocyanatgruppen fähigen Rest aufweisenden $C_1$-$C_{20}$ -Alkylrest oder Aralkylrest steht. Bevorzugt steht $R^1$ für einen unsubstituierten $C_1$-$C_4$ -Alkylrest, insbesondere einen Methylrest.

Die Heteroatome sind bevorzugt Sauerstoffatome. Die Reste R und $R^1$ sind jeweils über ein Kohlenstoffatom an Silizium gebunden.

In dieser Ausführungsform weist das Siloxan bevorzugt einen und weiter bevorzugt zwei oder mehrere substituierte $C_1$-$C_{20}$-Alkyl- oder Aralkylreste auf, wobei die Substituenten aus der Gruppe bestehend aus Trialkylsilyl- (z.B. Trimethylsilyl-), Hydroxy-, Carboxy-, Amino-, sek. Amino-, Mercapto-, Isocyanato-, Alkenyl-, (Meth)acryloyl-, Anhydrido- und Epoxy-Resten, bevorzugt aus der Gruppe bestehend aus Isocyanato-, (Meth)acryloyl-, Trimethylsilyl- und Aminoresten und besonders bevorzugt aus der Gruppe bestehend aus Isocyanato- und Aminoresten ausgewählt sind.

Insbesondere sind die Siloxane aus der Gruppe bestehend aus 1,3-Bis(2-aminoethylaminoethyl)tetramethyldisiloxan, 1,3-Bis(glycidoxypropyl)tetramethyl-disiloxan, Tris(glycidoxypropyldimethylsiloxy)phenylsilan, 3-Methacryloxypropylpentamethyldisiloxan, Poly(acryloxypropylmethyl)siloxan, 1,3-Bis-[(acryloxypropylmethyl)siloxan, 1,3-Bis(3-methacryloxypropyl)tetrakis-(trimethylsiloxy)disiloxan, 1,3-Bis(3-methacryloxypropyl)tetramethyldisiloxan, Momomethacryloxypropyl-terminiertes Polydimethylsiloxan, Poly[dimethylsiloxan-co-(3-(monomethacryloxy)propyl)methylsiloxan], 1,3,-Bis(4-methacryloxybutyl)-tetramethyldisiloxan, (Methacryloxypropyl)methylsiloxan/Dimethylsiloxan Copolymer, Dodecamethylpentasiloxan, 1,1,1,3,5,7,7,7-Octamethyl-3,5-bis(trimethylsilanyloxy)tetrasiloxan, Trimethylsilyl-terminiertem Poly(methylhydro-siloxan), Bis(hydroxyalkyl)-terminiertem Poly(dimethylsiloxan), Poly[di-methylsiloxan-co-(2-(3,4-epoxycyclohexyl)ethyl)methylsiloxan], Diglycidylether-terminiertem Poly(dimethylsiloxan), Poy[dimethylsiloxan-co-[3-(2-(3-hydroxy-ethoxy)ethoxy)propyl]methylsiloxan und Monoglycidylether-terminiertem Poly(dimethylsiloxan) sowie Mischungen davon ausgewählt.

Besonders bevorzugte Beispiele sind 1,3-Bis(2-aminoethylaminoethyl)tetramethyldisiloxan, 1,3-Bis(glycidoxypropyl)tetramethyl-disiloxan und Tris(glycidoxypropyldimethylsiloxy)phenylsilan sowie Mischungen davon.

Die erfindungsgemäß eingesetzten Siloxane können einzeln oder als Gemisch vorliegen und bezogen auf das gesamte Mehrkomponenten-Harzsystem, in einem Gewichtsanteil von 0,5 bis 10 Gew.-%, bevorzugt von 0,5 bis 8 Gew.-% und weiter bevorzugt von 1,5 bis 5 Gew.-%, vorgesehen sein.

Sowohl die Isocyanatkomponente als auch die Aminkomponente können mindestens einen Füllstoff und mindestens ein Rheologieadditiv enthalten, wobei es erfindungswesentlich ist, dass zumindest eine der beiden Komponenten sowohl einen Füllstoff als auch ein Rheologieadditiv enthält. Es ist bevorzugt, dass sowohl die Isocyanatkomponente als auch die Aminkomponente jeweils mindestens einen Füllstoff als auch mindestens einen Rheologieadditiv enthalten.

Der Gesamtfüllgrad einer Mörtelmasse hergestellt durch Vermischen der Isocyanatkomponente und der Aminkomponente des Mehrkomponenten-Harzsystems liegt erfindungsgemäß in einem Bereich von 30 bis 80 Gew.-% bezogen auf das Gesamtgewicht der Mörtelmasse, bevorzugt in einem Bereich von 35 bis 65, noch bevorzugter in einem Bereich von 35 bis 60 Gew.-%. Der Gesamtfüllgrad der Mörtelmasse bezieht sich auf den gewichtsprozentualen Anteil an Füllstoff und Rheologieadditiv bezogen auf das Gesamtgewicht der Isocyanatkomponente und der Aminkomponente. In einer bevorzugten Ausführungsform beträgt der Füllgrad der Isocyanatkomponente bis 80 Gew.-%, bevorzugt 10 bis 70 Gew.-%, weiter bevorzugt 35 bis 65 Gew.-% bezogen auf das Gesamtgewicht der Isocyanatkomponente. Der Füllgrad der Aminkomponente beträgt vorzugsweise bis 80 Gew.-%, bevorzugt 10 bis 70 Gew.-%, weiter bevorzugt 35 bis 65 Gew.-%, jeweils bezogen auf das Gesamtgewicht der Aminkomponente.

Als Füllstoffe dienen bevorzugt anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden. Als Füllstoffe kommen insbesondere nicht oberflächenbehandelte Quarzmehle, Feinquarzmehle und Feinstquarzmehle, wie beispielsweise Millisil® W3, Millisil® W6, Millisil® W8 und Millisil® W12,

bevorzugt Millisil® W12, in Frage. Ferner können silanisierte Quarzmehle, Feinquarzmehle und Feinstquarzmehl eingesetzt werden. Diese sind beispielsweils käuflich unter der Produktserie Silbond® der Firma Quarzwerke erhältlich. Hierbei sind die Produktserien Silbond® EST (Epoxysilan-modifiziert) und Silbond® AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, (d50 = 0,3 μm) oder Qualitäten wie DAW oder DAM mit den Typenbezeichnungen 45 (d50 < 0,44 μm), 07 (d50 > 8,4μm), 05 (d50 < 5,5 μm), 03 (d50 < 4,1 μm). Weiterhin können die oberflächenbehandelte Fein- und Feinstfüllstoffe vom Typ Aktisil AM (aminosilanbehandelt, d50 = 2,2 μm) und Aktisil EM (epoxysilanbehandelt, d50=2,2 μm) von Hoffman Mineral verwendet werden. Die Füllstoffe können einzeln oder auch in beliebigen Mischung untereinander verwendet werden

Die Einstellung der Fließeigenschaften erfolgt über den Zusatz von Rheologieadditiven, welche erfindungsgemäß in der Isocyanatkomponente und/oder der Aminkomponente verwendet werden Geeignete Rheologieadditive sind: Schichtsilikaten wie Laponite, Bentone oder Montmorillonit, Neuburger Kieselerde, pyrogenen Kieselsäuren, Polysaccharide; Polyacrylat-, Polyurethan- oder Polyharnstoffverdicker sowie Celluloseester. Zur Optimierung können weiterhin Netz- und Dispergiermittel, Oberflächenadditive, Entschäumer & Entlüfter, Wachsadditive, Haftvermittler, Viskositätsreduzierer oder Prozessadditive zugesetzt werden.

Der Anteil eines oder mehrerer Rheologieadditive in der Isocyanatkomponente liegt vorzugsweise bei 0,1 bis 3 Gew.-%, bevorzugt bei 0,1 bis 1,5 Gew.-% bezogen auf das Gesamtgewicht der Isocyanatkomponente. Der Anteil eines oder mehrerer Rheologieadditive in der Aminkomponente liegt vorzugsweise bei 0,1 bis 5 Gew.-%, bevorzugt bei 0,5 bis 3 Gew.-% bezogen auf das Gesamtgewicht der Aminkomponente.

In einer Ausführungsform enthält das Mehrkomponenten-Harzsystem ein Molekularsieb, insbesondere einen Zeolith als Füllstoff.

Als Zeolithe können synthetische oder natürliche Zeolithe, die im allgemeinen durch die Zusammensetzung $Mn^{+}_{x/n}$ $[(AlO_2)^{-}_{x}(SiO_2)_{y}]\cdot zH_2O$ worin n die Ladung von M ist, meist 1 oder 2, und M ein Kation eines Alkali- oder Erdalkalimetalls, insbesondere $Na^+$, $K^+$, $Ca^{2+}$ und $Mg^{2+}$ ist, charakterisiert werden, verwendet werden.

Als Zeolithe können folgende verwendet werden:

Zeolith A ($Na_{12[}(AlO_2)12(SiO_0)_{12}] \cdot 27\ H_2O$; $K_{12}[(AlO_2)_{12}(SiO_2]_{12}] \cdot 27\ H_2O$),

Zeolith X ($Na_{86}[(AlO_2)_{86}(SiO_2)_{106}] \cdot 264\ H_2O$),

Zeolith Y ($Na_{56}[(AlO_2)_{56}(SiO_2)_{136}] \cdot 250\ H_2O$),

Zeolith L ($K_9[(AlO_2)_9(SiO_2)_{27}] \cdot 22\ H_2O$),

Modernit ($Na_{8,7}[(AlO_2)_{8,7}(SiO_2)_{39,3}] \cdot 24\ H_2O$),

Zeolith ZSM 5 ($Na_{0,3}H_{3,8}[(AlO_2)_{4,1}(SiO_2)_{91,9}]$)

und

Zeolith ZSM 11 ($Na_{0,1}H_{1,7}[(AlO_2)_{1,8}(SiO_2)_{94,2}]$).

Davon sind Zeolith A, Zeolith X, Zeolith Y und Zeolith ZSM 5 und Zeolith ZSM 11 bevorzugt.

Das Molekularsieb, insbesondere der Zeolith kann als Pulver, Granulat oder als Paste (beispielsweise 48-50% Pulver in Rizinusöl dispergiert) eingesetzt werden.

Der synthetische Zeolith ist bevorzugt ein synthetischer Zeolith umfassend Teilchen mit einer Partikelgröße von bis zu 250 μm, insbesondere 5 μm bis 24 μm. Besonders bevorzugt weist der synthetische Zeolith eine Porengröße von etwa 5 Å bis etwa 10 Å, insbesondere etwa 3 Å bis etwa 4 Å auf.

Die spezifische Oberfläche (BET) der Zeolithpartikel liegt bevorzugt zwischen 800 $m^2/g$ und 1000 $m^2/g$.

Der Restwassergehalt des Zeoliths liegt unter 2,5 % w/w, bevorzugt unter 1,5% w/w, und die Wasserabsorptionskapazität liegt unter 22 - 24% w/w.

Es ist möglich, eine Mischung aus zwei oder mehreren unterschiedlichen Zeolithtypen zu verwenden.

Das Molekularsieb, insbesondere der Zeolith, wird bevorzugt in einer Menge von 0,1 bis 60 Gew.-%, besonders bevorzugt in einer Menge von 1 bis 35 Gew.-% und ganz besonders bevorzugt in einer Menge von 2 bis 5 Gew.-%, bezogen auf das Gesamtgewicht des Mehrkomponenten-Harzsystems, eingesetzt. Die Mengen werden dabei bei den allgemeinen, oben erwähnten Mengenangaben für die Füllstoffe berücksichtigt, wobei die Mengen für das Molekularsieb in den Mengen der Füllstoffe berücksichtigt sind.

Das Molekularsieb kann in einer der beiden Komponenten des Mehrkomponenten-Harzsystems oder in beiden

Komponenten enthalten sein.

Ein weiterer Gegenstand ist ferner eine Mörtelmasse, welche durch Vermischen der Isocyanatkomponente und der Aminkomponente des Mehrkomponenten-Harzsystems hergestellt wird.

Das Mehrkomponenten-Harzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Isocyanatkomponente und die Aminkomponente reaktionsinhibierend voneinander getrennt angeordnet sind.

Zur bestimmungsgemäßen Anwendung des Mehrkomponenten-Harzsystems werden die Isocyanatkomponente und die Aminkomponente aus den getrennten Kammern entleert und in einer geeigneten Vorrichtung, beispielsweise einem Statikmischer oder einem Dissolver, gemischt. Die Mischung aus Isocyanatkomponente und Aminkomponente (Mörtelmasse) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile Isocyanatkomponente reagieren mit den Aminogruppen der Aminkomponente unter Polyaddition, sodass die Mörtelmasse unter Umgebungsbedingungen innerhalb einer gewünschten Zeit, vorzugsweise innerhalb weniger Minuten oder Stunden, aushärtet.

Die erfindungsgemäße Mörtelmasse bzw. das erfindungsgemäße Mehrkomponenten-Harzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Mörtelmassen und die erfindungsgemäßen Mehrkomponenten-Harzsysteme zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Mörtelmasse oder ein erfindungsgemäßes Mehrkomponenten-Harzsystem wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist ferner auch die Verwendung einer erfindungsgemäßen Mörtelmasse oder eines Mehrkomponenten-Harzsystem zur chemischen Befestigung von Konstruktionselementen in mineralischen Untergründen.

Ein weiterer Gegenstand ist auch die Verwendung einer erfindungsgemäßen Mörtelmasse oder eines erfindungsgemäßen Mehrkomponenten-Harzsystem zur Verbesserung der Auszugskräfte eines chemischen Dübels hergestellt aus einem erfindungsgemäßen Mehrkomponenten-Harzsystem Bohrlöchern. Dies umfasst insbesondere eine Erhöhung der Auszugsfestigkeiten in gut gereinigten Bohrlöcher, wobei gut gereinigt bedeutet, dass die Bohrlöcher wiederholt mit Druckluft ausgeblasen, dann ausgebürstet, um an den Bohrlochwandung anhaftendes Bohrmehl und Bohrklein zu lockern, und anschließend erneute wiederholt mit Druckluft ausgeblasen wurden.

Die Erfindung wird im Folgenden anhand von Ausführungsbeispielen weiter beschrieben, was jedoch nicht in einem einschränkenden Sinn verstanden werden soll.

## Ausführungsbeispiele

Zur Herstellung des Vergleichszusammensetzung und der erfindungsgemäßen Zusammensetzung wurden folgende Verbindungen verwendet:

| | | |
|---|---|---|
| Hexamethylen-1,6-diisocyanat Homopolymere | niedrigviskoses, aliphatisches Polyisocyanat-Herz auf Basis Hexamethylendiisocyanat (Equivalentgewicht ca. 179; NCO-Gehalt nach M105-ISO 11909 23,5 ± 0,5 Gew.-%, monomeres HDI nach M106-ISO 10283 < 0,25 %; Viskosität (23°C) M014-ISO 3219/A.3 730 ± 100 mPa·s; Desmodur™ N 3900) | Covestro AG |
| Mischung aus 6-Methyl-2,4-bis(methylthio)phenylen-1,3-diamin und 2-Methyl-4,6-bis(methylthio) phenylen-1,3-diamin | Ethacure® 300 Curative (Dimethylthiotoluoldiamin 95-97 %, Monomethylthiotoluoldiamin 2- 3 %; Equivalentgewicht mit Isocyanaten 107) | Albermale Corporation |
| 3-Glycidyloxypropyltrimethoxysilan | Dynasylan® GLYMO | Evonik Resource Efficiency GmbH |
| Tris(isooctadecanoato-O-)(propan-2-olato)titan | Ken-React® KR® TTS | FARRL GmbH |
| Hydrogentetrakis[2,2-bis(allyloxy)-methyl]butan-1-olato-O1] bis(ditridecylphosphito-O")titanat(2-) | Ken-React® KR® 55 | FARRL GmbH |
| 1,3-Bis(glycidyloxypropyl)-tetramethyldisiloxan | | ABCR GmbH |
| Quarzmehl | Millisil™ W12 | Quarzwerke Frechen |
| Kieselsäure | Cab-O-Sil™ TS-720 | Cabot |

Die Vergleichszusammensetzung und die erfindungsgemäßen Zusammensetzungen der Isocyanatkomponente und der Aminkomponente ist in den nachfolgenden Tabelle 1 angegeben.

**Tabelle 1**: Zusammensetzungen der Isocyanatkomponente und der Aminkomponente

[Gew.-%] für das Vergleichsbeispiel und die erfindungsgemäßen Beispiele 1 bis 3;

Verwendung unterschiedlicher Additive

| | | | Vergleich 1 | Vergleich 2 | 1 | 2 | 3 |
|---|---|---|---|---|---|---|---|
| Isocyanatkomponente | | Hexamethylen-1,6-diisocyanat Homopolymer (Desmodur® N3900) | 37,5 | 36 | 37,5 | 37,5 | 36 |
| | Additiv | 3-Glycidyloxypropyltrimethoxysilan (Dynaslan® Glymo) | | 3 | | | |
| | | Tris(isooctadecanoato-O-)(propan-2-olato)titan (Ken-React® KR® TTS) | | | 0,5 | | |
| | | Hydrogentetrakis[2,2-bis(allyloxy)-methyl]butan-1-olato-O1]bis(ditridecylphosphito-O")titanat(2-) (Ken-React® KR® 55) | | | | 0,5 | |
| | | 1,3-Bis(glycidoxypropyl)-tetramethyldisiloxan | | | | | 3 |
| | | Quarzmehl (W12) | 52 | 50,5 | 51,5 | 51,5 | 50,5 |
| | | Kieselsäure | 1,5 | 1,5 | 1,5 | 1,5 | 1,5 |
| | | Zeolith (Pumol 3ST Powder) | 3 | 3 | 3 | 3 | 3 |
| Aminkomponente | | (6-Methyl-2,4-bis(methylthio)phenylen-1,3-diamin / 2-Methyl-4,6-bis(methylthio)phenylen-1,3-diamin (DMTDA) | 49,5 | 49,5 | 49,5 | 49,5 | 49,5 |
| | | Quarzmehl (W12) | 49 | 49 | 49 | 49 | 49 |
| | | Kieselsäure | 1,5 | 1,5 | 1,5 | 1,5 | 1,5 |

Zur Herstellung der Mörtelmassen wurden zunächst die Isocyanatkomponente und die Aminkomponente jeweils einzeln hergestellt. Dazu wurden jeweils die in Tabelle 1 angegebenen Bestandteile in einem Dissolver (Fa. PC Laborsystem GmbH, 8 min; 3500U/min) unter Vakuum (80mbar) zu einer luftblasenfreien pastösen Masse homogenisiert. Anschließend wurden die Isocyanatkomponente und die Aminkomponente miteinander vereinigt und in einem Speedmixer für 30 s bei 1500 U/min gemischt. Die so erhaltene Mörtelmasse wurde in eine Einkomponenten-Hartkartusche gefüllt und mittels eines Auspressgerätes in ein Bohrloch injiziert.

Zur Bestimmung der Verbundspannungen (Lastwerte) der ausgehärteten Befestigungsmassen wurden Ankergewindestangen Hilti HAS-M12 in hammergebohrte Bohrlöcher in trockenen Beton C20/25 mit einem Durchmesser von 14 mm und einer Bohrlochtiefe von 72 mm gesetzt. Hier wurden die Bohrlöcher zunächst jeweils 2 mal mit Druckluft (6 bar), anschließend 2 mal mit einer Reinigungsbürste und erneut 2 mal mit Druckluft (6 bar) gereinigt. Dann wurden die so gereinigten Bohrlöcher halb voll mit der Vergleichszusammensetzung und den erfindungsgemäßen Zusammensetzungen gefüllt und die Ankergewindestangen bis zu einer Einbindetiefe von 60 mm eingeführt. Die Verbundspannungen wurden durch zentrisches Ausziehen der Ankergewindestangen ermittelt. Es wurden jeweils fünf Ankergewindestangen gesetzt und nach 24 Stunden bei etwa 21°C Aushärtung die Verbundspannung bestimmt. Die Befestigungsmassen wurden über einen Statikmischer (Mischer HIRT-RE-M; Hilti Aktiengesellschaft) aus den Kartuschen ausgepresst und in die Bohrlöcher injiziert.

Die unter Verwendung der oben beschriebenen Mörtelrezepturen erhaltenen Verbundspannungen für trockene und gut gereinigte Bohrlöcher sind in der nachfolgenden Tabelle 2 aufgelistet.

Tabelle 2: Ergebnisse der Bestimmung der Verbundspannungen

| | Vergleich 1 | Vergleich 2 | 1 | 2 | 3 |
|---|---|---|---|---|---|
| Verbundspannung [N/mm$^2$] | 28,8 | 33,2 | 31,1 | 33 | 32,7 |

Die Ergebnisse zeigen, dass die erfindungsgemäßen Massen eine höhere Leistung in gut gereinigten trockenen Bohrlöcher aufweisen, verglichen mit den Massen, die keinen Haftvermittler enthalten. Ferner zeigen die Ergebnisse, dass die beanspruchten Additive vergleichbare Werte zu den Silan-Additiven des Vergleichsbeispiels 2 zeigen.

**Patentansprüche**

1. Mehrkomponenten-Harzsystem enthaltend

   - eine Isocyanatkomponente, die mindestens ein aliphatisches und/oder aromatisches Polyisocyanat mit einer mittleren NCO-Funktionalität von 2 oder größer umfasst, und
   - eine Aminkomponente, die mindestens ein gegenüber Isocyanatgruppen reaktives Amin mit einer mittleren NH-Funktionalität von 2 oder größer umfasst,

     mit der Maßgabe, dass das Mehrkomponenten-Harzsystem frei von Polyasparaginsäureestern ist, wobei die Isocyanatkomponente und/oder die Aminkomponente mindestens einen Füllstoff sowie mindestens ein Rheologieadditiv umfasst und der Gesamtfüllgrad einer Mörtelmasse hergestellt durch Vermischen der Isocyanatkomponente und der Aminkomponente in einem Bereich von 30 bis 80 Gew.-% liegt,
     **dadurch gekennzeichnet, dass**
     die Isocyanatkomponente und/oder die Aminkomponente mindestens ein Additiv enthält, wobei das Additiv

   - eine Verbindung der Formel I

     $$A_n(L)_m(X)_p \qquad \text{(Formel I)},$$

   wobei

     A für Phosphor, Bor, Aluminium, Titan oder Zirkonium steht,
     X gleich oder verschieden sein kann und für einen Alkoxy-, Aryloxy- oder Acyloxyrest steht,
     L gleich oder verschieden sein kann und für wenigstens einen Liganden steht,
     n für die Wertigkeit von A steht, und
     p eine ganze Zahl von 1 bis n bedeutet.
     m 0 oder eine ganze Zahl von 1 bis n-1 bedeutet und

     $$n = m+p$$

     ist,

   oder
   - ein Siloxan, welches mindestens einen funktionellen Rest aufweist, der zur Additionsreaktion an Isocyanate befähigt ist, jedoch keine an ein Siliziumatom gebundene hydrolysierbare Gruppen aufweist, ist.

2. Mehrkomponenten-Harzsystem nach Anspruch 1, **dadurch gekennzeichnet, dass** in der Verbindung der Formel I X ein Alkoxyrest $-OR^1$ oder ein Acyloxyrest $-O(C=O)R^1$ ist, worin $R^1$ jeweils eine wahlweise substituierte, lineare oder verzweigte Alkylgruppe mit 1 bis 24 C-Atomen bedeutet.

3. Mehrkomponenten-Harzsystem nach Anspruch 2, **dadurch gekennzeichnet, dass** X ein Rest ist, der aus der aus $-O-CH_3$, $-O-C_2H_5$, $-O-C_3H_7$, $-O-C_4H_9$, $-O-C_5H_{11}$, $-O-(CO)-CH_3$, $-O-(CO)-C_2H_5$, $-O-(CO)-C_3H_7$, $-O-(CO)-C_4H_9$ und $-O-(CO)-C_5H_{11}$, bestehenden Gruppe ausgewählt ist.

4. Mehrkomponenten-Harzsystem nach Anspruch 3, **dadurch gekennzeichnet, dass** X ein aus der aus $-O-CH_3$, $-O-C_2H_5$, $-O-C_3H_7$ und $-O-C_4H_9$, bestehenden Gruppe ausgewählter Rest ist.

5. Mehrkomponenten-Harzsystem nach einem der vorhergehenden Ansprüche, **dadurch gekennzeichnet, dass** in der Verbindung der Formel I X gleich ist.

6. Mehrkomponenten-Harzsystem nach einem der vorangehenden Ansprüche, **dadurch gekennzeichnet, dass** in der Verbindung der Formel I der Ligand L aus der Gruppe bestehend aus Acetoacetat, Phosphat, Phosphit, Sulfat, Sulfit, CO, CN, Cyclopentyl und Pentamethylcyclopentyl ausgewählt ist.

7. Mehrkomponenten-Harzsystem nach einem der vorangehenden Ansprüche, **dadurch gekennzeichnet, dass** die Verbindung der Formel I aus der Gruppe bestehend aus Trimethylphosphat, Triethylphosphat, Triethylborat, Triethylaluminat, Triisopropylborat, Tributylborat, Tetraethyltitanat, Tetraisopropyltitanat, Tetraethylzirkonat und Tetrabutylzirkonat ausgewählt ist.

8. Mehrkomponenten-Harzsystem nach einem der vorangehenden Ansprüche, **dadurch gekennzeichnet, dass** die Verbindung der Formel I in einer Menge von 0,001 - 10 Gew.-% vorliegt, bezogen auf das Gesamtgewicht des Mehrkomponenten-Harzsystems.

9. Mehrkomponenten-Harzsystem nach Anspruch 1, **dadurch gekennzeichnet, dass** in dem Siloxan der zur Additionsreaktion mit Isocyanatgruppen befähigte funktionelle Rest ein terminaler Rest ist.

10. Mehrkomponenten-Harzsystem nach Anspruch 9, **dadurch gekennzeichnet, dass** der funktionelle Rest aus der Gruppe bestehend aus Hydroxy-, Carboxy-, Amino-, sek. Amino-, Mercapto-, Isocyanato-, Alkenyl-, (Meth)acryloyl-, Anhydrido- und Epoxy-Resten bestehenden Gruppe, bevorzugt aus der Gruppe bestehend aus Epoxy- und Aminoresten ausgewählt ist.

11. Mehrkomponenten-Harzsystem nach einem der Ansprüche 1, 9 oder 10, **dadurch gekennzeichnet, dass** das Siloxan die Struktur

$$R_3Si\text{-}[O\text{-}Si(R^1)_2]_n\text{-}O\text{-}SiR_3$$

aufweist, wobei

n für 0 oder eine ganze Zahl von einschließlich 1 bis 1000 steht,
R und $R^1$ jeweils unabhängig voneinander für einen gegebenenfalls Heteroatome enthaltenden und gegebenenfalls mindestens einen zur Additionsreaktion mit Isocyanatgruppen fähigen Rest aufweisenden $C_1$-$C_{20}$-Alkylrest oder -Aralkylrest steht.

12. Mehrkomponenten-Harzsystem nach einem der vorangehenden Ansprüche 9 bis 11, **dadurch gekennzeichnet, dass** das Siloxan zwei oder mehr, gleiche oder verschiedene, bevorzugt zwei gleiche endständige, zur Additionsreaktion mit Isocyanatgruppen befähigte funktionelle Reste aufweist.

13. Mehrkomponenten-Harzsystem nach einem der Ansprüche 1 oder 9 bis 12, **dadurch gekennzeichnet, dass** das Siloxan aus der Gruppe bestehend aus 1,3-Bis(2-aminoethylaminoethyl)tetramethyldisiloxan, 1,3-Bis(glycidoxypropyl)-tetramethyldisiloxan, Tris(glycidoxypropyldimethylsiloxy)-phenylsilan, 3-Methacryloxy-propylpentamethyldisiloxan, Poly(acryloxypropyl-methyl)siloxan, 1,3-Bis-[(acryloxypropylmethyl)siloxan, 1,3-Bis(3-methacryl oxypropyl)tetrakis-(trimethylsiloxy)disiloxan, 1,3-Bis(3-methacryloxypropyl)tetra-methyldisiloxan, Momomethacryloxypropyl-terminiertes Polydimethylsiloxan, Poly[dimethylsiloxan-co-(3-(monomethacryloxy)propyl)methylsiloxan], 1,3,-Bis(4-methacryloxybutyl)-tetramethyldisiloxan, (Methacryloxypropyl)methyl siloxan/Dimethylsiloxan Copolymer, Dodecamethylpentasiloxan, 1,1,1,3,5,7,7,7-Octamethyl-3,5-bis(trimethylsilanyloxy)tetrasiloxan, Trimethylsilyl-terminiertem Poly(methylhydro-siloxan), Bis(hydroxyalkyl)-terminiertem Poly(dimethylsiloxan), Poly[di-methylsiloxan-co-(2-(3,4-epoxycyclohexyl)ethyl)methylsiloxan], Diglyci-dyletherterminiertem Poly(dimethylsiloxan), Poy [dimethylsiloxan-co-[3-(2-(3-hydroxy-ethoxy)ethoxy)propyl]methylsiloxan und Monoglycidylether-terminiertem Poly(dimethylsiloxan) ausgewählt ist.

14. Mehrkomponenten-Harzsystem nach einem der Ansprüche 1 oder 9 bis 13, **dadurch gekennzeichnet, dass** der Anteil des Siloxans von 0,5 bis 20 Gew.-% beträgt, bezogen auf das Gesamtgewicht des Mehrkomponenten-Harzsystems.

15. Mehrkomponenten-Harzsystem nach einem der vorhergehenden Ansprüche, **dadurch gekennzeichnet, dass**

sowohl die Isocyanatkomponente als auch die Aminkomponente mindestens einen Füllstoff und mindestens ein Rheologieadditiv umfassen.

**16.** Mehrkomponenten-Harzsystem gemäß Anspruch 15, **dadurch gekennzeichnet, dass** der Füllgrad der Isocyanatkomponente und der Füllgrad der Aminkomponente 10 bis 70 Gew.-% beträgt, jeweils bezogen auf das Gesamtgewicht der Isocyanatkomponente bzw. der Aminkomponente.

**17.** Mehrkomponenten-Harzsystem nach einem der vorhergehenden Ansprüche, **dadurch gekennzeichnet, dass** die Isocyanatkomponente und die Aminkomponente in einem Mengenverhältnis vorliegen, bei dem das Äquivalentverhältnis von NCO-gruppen zu gegenüber den NCO-Gruppen reaktionsfähigen Amingruppen zwischen 0,3 und 2,0 liegt.

**18.** Mehrkomponenten-Harzsystem nach einem der vorhergehenden Ansprüche, **dadurch gekennzeichnet, dass** die Isocyanatkomponente mindestens ein aromatisches Polyisocyanat ausgewählt aus der Gruppe bestehend aus 1,4-Phenylendiisocyanat, 2,4- und/oder 2,6-Toluylendiisocyanat, Xylylendiisocyanat, hydriertem Xylylendiisocyanat, Tetramethylxylylendiisocyanat, 1,5-Naphthylendiisocyanat, Diphenylenmethan-2,4'- und/oder -4,4'-diisocyanat, Triphenylmethan-4,4',4"-triisocyanat, Bis- und Tris-(isocyanatoalkyl)-benzol, -toluol und -xylol sowie Gemische davon umfasst.

**19.** Mehrkomponenten-Harzsystem nach einem Ansprüche 1 bis 17, **dadurch gekennzeichnet, dass** die Isocyanatkomponente mindestens ein aliphatisches Polyisocyanat ausgewählt aus der Gruppe bestehend aus Hexamethylendiisocyanat (HDI), Trimethyl-HDI (TMDI), Pentandiisocyanat (PDI) 2-Methylpentan-1,5-diisocyanat (MPDI), Isophorondiisocyanat (IPDI), 1,3- sowie 1,4-Bis(isocyanatomethyl)cyclohexan ($H_6$XDI), Bis(isocyanatomethyl)norbornan (NBDI), 3(4)-Isocyanatomethyl-1-methyl-cyclohexylisocyanat (IMCI) und 4,4'-Bis(iso-cyanatocyclohexyl)methan ($H_{12}$MDI) und Gemische davon umfasst.

**20.** Mehrkomponenten-Harzsystem nach einem der vorhergehenden Ansprüche, **dadurch gekennzeichnet, dass** der Gesamtfüllgrad in einem Bereich von 35 bis 65 Gew.-%, bezogen auf das Gesamtgewicht des Mehrkomponenten-Harzsystems liegt.

**21.** Mehrkomponenten-Harzsystem nach einem der vorhergehenden Ansprüche, **dadurch gekennzeichnet, dass** das gegenüber Isocyanatgruppen reaktive Amin ausgewählt ist aus der Gruppe bestehend aus 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure 300), 4,4'-Methylenbis(2,6-diethylanilin), 4,4'-Methylenebis(N-sec-butylcyclohexanamin) (Clearlink 1000), 3,3'-Diaminodiphenylsulfon (Dapson), N,N'-Di-sec-butyl-p-phenylenediamin und 2,4,6-Trimethyl-m-phenylenediamin sowie Mischungen davon.

**22.** Mehrkomponenten-Harzsystem gemäß einem der vorhergehenden Ansprüche, **dadurch gekennzeichnet, dass** das Mehrkomponenten-Harzsystem ein Zweikomponenten-Harzsystem ist.

**23.** Mörtelmasse hergestellt durch das Vermischen der Isocyanatkomponente und der Aminkomponente des Mehrkomponenten-Harzsystems gemäß einem der vorhergehenden Ansprüche.

**24.** Verfahren zur chemischen Befestigung von Konstruktionselementen in Bohrlöchern, wobei zur chemischen Befestigung eine Mörtelmasse nach Anspruch 23 oder ein Mehrkomponenten-Harzsystem nach einem der Ansprüche 1 bis 22 verwendet wird.

**25.** Verwendung einer Mörtelmasse nach Anspruch 23 oder eines Mehrkomponenten-Harzsystem nach einem der Ansprüche 1 bis 22 zur Verbesserung der Auszugswerte eines chemischen Dübels.

**26.** Verwendung nach Anspruch 25 zur Verbesserung der Auszugsfestigkeit in gereinigten Bohrlöchern.

## Claims

**1.** Multi-component resin system containing

- an isocyanate component which comprises at least one aliphatic and/or aromatic polyisocyanate having an

average NCO functionality of 2 or more, and
- an amine component comprising at least one amine which is reactive to isocyanate groups and has an average NH functionality of 2 or more,

with the proviso that the multi-component resin system is free of polyaspartic acid esters, the isocyanate component and/or the amine component comprising at least one filler and at least one rheology additive and the total filling level of a mortar composition produced by mixing the isocyanate component and the amine component being in a range from 30 to 80 wt.%,
**characterized in that**
the isocyanate component and/or the amine component contains at least one additive, the additive being

- a compound of formula I

$$A_n(L)_m(X)_p \qquad \text{(formula I)},$$

wherein

A represents phosphorous, boron, aluminum, titanium or zirconium,
X can be the same or different and represents an alkoxy, aryloxy or acyloxy functional group,
L can be the same or different and represents at least one ligand,
n represents the valency of A, and
p represents an integer from 1 to n,
m represents 0 or an integer from 1 to n-1 and
n = m+p,

or
- a siloxane having at least one functional group which is capable of addition reaction to isocyanates, but which has no hydrolyzable groups bonded to a silicon atom.

**2.** Multi-component resin system according to claim 1, **characterized in that** in the compound of formula I, X is an alkoxy functional group $-OR^1$ or an acyloxy functional group $-O(C{=}O)R^1$, wherein $R^1$ is in each case an optionally substituted, linear or branched alkyl group having 1 to 24 carbon atoms.

**3.** Multi-component resin system according to claim 2, **characterized in that** X is a functional group selected from the group consisting of $-O-CH_3$, $-O-C_2H_5$, $-O-C_3H_7$, $-O-C_4H_9$, $-O-C_5H_{11}$, $-O-(CO)-CH_3$, $-O-(CO)-C_2H_5$, $-O-(CO)-C_3H_7$, $-O-(CO)-C_4H_9$ and $-O-(CO)-C_5H_{11}$.

**4.** Multi-component resin system according to claim 3, **characterized in that** X is a functional group selected from the group consisting of $-O-CH_3$, $-O-C_2H_5$, $-O-C_3H_7$ and $-O-C_4H_9$.

**5.** Multi-component resin system according to any of the preceding claims, **characterized in that** in the compound of formula I, X is the same.

**6.** Multi-component resin system according to any of the preceding claims, **characterized in that** in the compound of formula I, the ligand L is selected from the group consisting of acetoacetate, phosphate, phosphite, sulfate, sulfite, CO, CN, cyclopentyl and pentamethylcyclopentyl.

**7.** Multi-component resin system according to any of the preceding claims, **characterized in that** the compound of formula I is selected from the group consisting of trimethyl phosphate, triethyl phosphate, triethyl borate, triethyl aluminate, triisopropyl borate, tributyl borate, tetraethyl titanate, tetraisopropyl titanate, tetraethyl zirconate and tetrabutyl zirconate.

**8.** Multi-component resin system according to any of the preceding claims, **characterized in that** the compound of formula I is present in an amount of 0.001 - 10 wt.%, based on the total weight of the multi-component resin system.

**9.** Multi-component resin system according to claim 1, **characterized in that** in the siloxane, the functional group capable of addition reaction with isocyanate groups is a terminal functional group.

10. Multi-component resin system according to claim 9, **characterized in that** the functional group is selected from the group consisting of hydroxy, carboxy, amino, sec. amino, mercapto, isocyanato, alkenyl, (meth)acryloyl, anhydrido and epoxy functional groups, preferably from the group consisting of epoxy and amino functional groups.

11. Multi-component resin system according to any of claims 1, 9 or 10, **characterized in that** the siloxane has the structure

$$R_3Si\text{-}[O\text{-}Si(R^1)_2]_n\text{-}O\text{-}SiR_3$$

wherein

n represents 0 or an integer from 1 to 1000, inclusive,
R and $R^1$ each independently represent a $C_1$-$C_{20}$-alkyl functional group or aralkyl functional group optionally containing heteroatoms and optionally comprising at least one functional group capable of addition reaction with isocyanate groups.

12. Multi-component resin system according to any of preceding claims 9 to 11, **characterized in that** the siloxane comprises two or more identical or different, preferably two identical terminal functional groups capable of addition reaction with isocyanate groups.

13. Multi-component resin system according to any of claims 1 or 9 to 12, **characterized in that** the siloxane is selected from the group consisting of 1,3-bis(2-aminoethylaminoethyl)tetramethyldisiloxane, 1,3-bis(glycidoxypropyl)tetramethyldisiloxane, tris(glycidoxypropyldimethylsiloxy)-phenylsilane, 3-methacryloxypropylpentamethyldisiloxane, poly(acryloxypropylmethyl)siloxane, 1,3-bis[(acryloxypropylmethyl)siloxane, 1,3-bis(3-methacryloxypropyl)tetrakis-(trimethylsiloxy)disiloxane, 1,3-bis(3-methacryloxypropyl)tetramethyldisiloxane, monomethacryloxypropyl terminated polydimethylsiloxane, poly[dimethylsiloxane-co-(3-(monomethacryloxy)propyl)methylsiloxane], 1,3,-bis(4-methacryloxybutyl)tetramethyldisiloxane, (methacryloxypropyl)methyl siloxane/dimethylsiloxane copolymer, dodecamethylpentasiloxane, 1,1,1,3,5,7,7,7-octamethyl-3,5-bis(trimethylsilanyloxy)tetrasiloxane, trimethylsilyl terminated poly(methylhydro-siloxane), bis(hydroxyalkyl)-terminated poly(dimethylsiloxane), poly[dimethylsiloxane-co-(2-(3,4-epoxycyclohexyl)ethyl)methylsiloxane], diglycidyl ether terminated poly(dimethylsiloxane), poly[dimethylsiloxane-co-[3-(2-(3-hydroxyethoxy)ethoxy)propyl]methylsiloxane and monoglycidyl ether terminated poly(dimethylsiloxane).

14. Multi-component resin system according to any of claims 1 or 9 to 13, **characterized in that** the proportion of the siloxane is from 0.5 to 20 wt.%, based on the total weight of the multi-component resin system.

15. Multi-component resin system according to any of the preceding claims, **characterized in that** both the isocyanate component and the amine component comprise at least one filler and at least one rheology additive.

16. Multi-component resin system according to claim 15, **characterized in that** the filling level of the isocyanate component and the filling level of the amine component is 10 to 70 wt.%, based in each case on the total weight of the isocyanate component and the amine component, respectively.

17. Multi-component resin system according to any of the preceding claims, **characterized in that** the isocyanate component and the amine component are present in a quantity ratio in which the equivalent ratio of NCO groups to amine groups which are reactive to the NCO groups is between 0.3 and 2.0.

18. Multi-component resin system according to any of the preceding claims, **characterized in that** the isocyanate component comprises at least one aromatic polyisocyanate selected from the group consisting of 1,4-phenylene diisocyanate, 2,4- and/or 2,6-toluylene diisocyanate, xylylene diisocyanate, hydrogenated xylylene diisocyanate, tetramethylxylylene diisocyanate, 1,5-naphthylene diisocyanate, diphenylene methane-2,4'- and/or -4,4'-diisocyanate, triphenylmethane-4,4',4"-triisocyanate, bis- and tris-(isocyanatoalkyl)-benzene, -toluene and -xylene, and mixtures thereof.

19. Multi-component resin system according to any of claims 1 to 17, **characterized in that** the isocyanate component comprises at least one aliphatic polyisocyanate selected from the group consisting of hexamethylene diisocyanate (HDI), trimethyl HDI (TMDI), pentane diisocyanate (PDI) 2-methylpentane-1,5-diisocyanate (MPDI), isophorone diisocyanate (IPDI), 1,3- and 1,4-bis(isocyanatomethyl)cyclohexane ($H_6$XDI), bis(isocyanatomethyl)norbornane

(NBDI), 3(4)-isocyanatomethyl-1-methylcyclohexyl isocyanate (IMCI) and 4,4'-bis(isocyanatocyclohexyl)methane ($H_{12}MDI$), and mixtures thereof.

**20.** Multi-component resin system according to any of the preceding claims, **characterized in that** the total filling level is in a range from 35 to 65 wt.%, based on the total weight of the multi-component resin system.

**21.** Multi-component resin system according to any of the preceding claims, **characterized in that** the amine which is reactive to isocyanate groups is selected from the group consisting of 4,4'-methylene-bis[N-(1-methylpropyl)phenylamine], an isomer mixture of 6-methyl-2,4-bis(methylthio)phenylene-1,3-diamine and 2-methyl-4,6-bis(methylthio)phenylene-1,3-diamine (Ethacure 300), 4,4'-methylenebis(2,6-diethylaniline), 4,4'-methylenebis(N-sec-butylcyclohexanamine) (Clearlink 1000), 3,3'-diaminodiphenylsulfone (dapsone), N,N'-di-sec-butyl-p-phenylenediamine and 2,4,6-trimethyl-m-phenylenediamine, and mixtures thereof.

**22.** Multi-component resin system according to any of the preceding claims, **characterized in that** the multi-component resin system is a two-component resin system.

**23.** Mortar composition produced by mixing the isocyanate component and the amine component of the multi-component resin system according to any of the preceding claims.

**24.** Method for chemically fastening construction elements in boreholes, wherein a mortar composition according to claim 23 or a multi-component resin system according to any of claims 1 to 22 is used for the chemical fastening.

**25.** Use of a mortar composition according to claim 23 or a multi-component resin system according to any of claims 1 to 22 for improving the pull-out values of a chemical anchor.

**26.** Use according to claim 25 for improving the pull-out strength in cleaned boreholes.

## Revendications

**1.** Système de résine à plusieurs composants, contenant

- un composant isocyanate qui comprend au moins un polyisocyanate aliphatique et/ou aromatique comportant une fonctionnalité NCO moyenne de 2 ou plus, et
- un composant amine qui comprend au moins une amine réactive vis-à-vis des groupes isocyanate comportant une fonctionnalité NH moyenne de 2 ou plus,

à condition que le système de résine à plusieurs composants soit exempt d'esters d'acide polyaspartique, dans lequel le composant isocyanate et/ou le composant amine comprend au moins un matériau de remplissage ainsi qu'au moins un additif rhéologique et le niveau de remplissage total d'une masse de mortier préparée en mélangeant le composant isocyanate et le composant amine se situe dans une plage allant de 30 à 80 % en poids,
**caractérisé en ce que**
le composant isocyanate et/ou le composant amine contient au moins un additif, dans lequel l'additif est

- un composé de formule I

$$A_n(L)_m(X)_p \qquad \text{(formule I)},$$

dans lequel

A représente le phosphore, bore, aluminium, titane ou zirconium,
X peut être identique ou différent et représente un radical alcoxy, aryloxy ou acyloxy,
L peut être identique ou différent et représente au moins un ligand,
n représente la valence de A, et
p désigne un nombre entier allant de 1 à n,
m désigne 0 ou un nombre entier allant de 1 à n-1, et
n = m+p,

ou
- un siloxane qui présente au moins un radical fonctionnel qui est capable d'une réaction d'addition avec des isocyanates, mais qui ne présente aucun groupe hydrolysable lié à un atome de silicium.

2. Système de résine à plusieurs composants selon la revendication 1, **caractérisé en ce que,** dans le composé de formule I, X est un radical alcoxy $-OR^1$ ou un radical acyloxy $-O(C{=}O)R^1$, où $R^1$ désigne respectivement un groupe alkyle linéaire ou ramifié, éventuellement substitué, comportant 1 à 24 atomes de carbone.

3. Système de résine à plusieurs composants selon la revendication 2, **caractérisé en ce que** X est un radical choisi dans le groupe constitué de $-O-CH_3$, $-OC_2H_5$, $-O-C_3H_7$, $-O-C_4H_9$, $-O-C_5H_{11}$, $-O-(CO)-CH_3$, $-O-(CO)-C_2H_5$, $-O-(CO)-C_3H_7$, $-O-(CO)-C_4H_9$ et $-O-(CO)-C_5H_{11}$.

4. Système de résine à plusieurs composants selon la revendication 3, **caractérisé en ce que** X est un radical choisi dans le groupe constitué de $-O-CH_3$, $-OC_2H_5$, $-O-C_3H_7$ et $-O-C_4H_9$.

5. Système de résine à plusieurs composants selon l'une des revendications précédentes, **caractérisé en ce que,** dans le composé de formule I, X est identique.

6. Système de résine à plusieurs composants selon l'une des revendications précédentes, **caractérisé en ce que,** dans le composé de formule I, le ligand L est choisi dans le groupe constitué d'acétoacétate, phosphate, phosphite, sulfate, sulfite, CO, CN, cyclopentyle et pentaméthylcyclopentyle.

7. Système de résine à plusieurs composants selon l'une des revendications précédentes, **caractérisé en ce que** le composé de formule I est choisi dans le groupe constitué de phosphate de triméthyle, phosphate de triéthyle, borate de triéthyle, aluminate de triéthyle, borate de triisopropyle, borate de tributyle, titanate de tétraéthyle, titanate de tétraisopropyle, zirconate de tétraéthyle et zirconate de tétrabutyle.

8. Système de résine à plusieurs composants selon l'une des revendications précédentes, **caractérisé en ce que** le composé de formule I est présent en une quantité allant de 0,001 à 10 % en poids, par rapport au poids total du système de résine à plusieurs composants.

9. Système de résine à plusieurs composants selon la revendication 1, **caractérisé en ce que,** dans le siloxane, le radical fonctionnel capable d'une réaction d'addition avec des groupes isocyanate est un radical terminal.

10. Système de résine à plusieurs composants selon la revendication 9, **caractérisé en ce que** le radical fonctionnel est choisi dans le groupe constitué de radicaux hydroxy, carboxy, amino, amino secondaire, mercapto, isocyanato, alcényle, (méth)acryloyle, anhydride et époxy, de préférence dans le groupe constitué de radicaux époxy et amino.

11. Système de résine à plusieurs composants selon l'une des revendications 1, 9 ou 10, **caractérisé en ce que** le siloxane présente la structure

$$R_3Si-[O-Si(R^1)_2]_n-O-SiR_3$$

dans lequel

n représente 0 ou à un nombre entier compris entre 1 et 1000 inclus,
R et $R^1$ représentent respectivement indépendamment l'un de l'autre un radical alkyle ou aralkyle en $C_1$-$C_{20}$ contenant éventuellement des hétéroatomes et présentant éventuellement au moins un radical capable d'une réaction d'addition avec des groupes isocyanate.

12. Système de résine à plusieurs composants selon l'une des revendications 9 à 11 précédentes, **caractérisé en ce que** le siloxane présente deux radicaux fonctionnels ou plus, identiques ou différents, de préférence deux radicaux terminaux identiques, capables d'une réaction d'addition avec des groupes isocyanate.

13. Système de résine à plusieurs composants selon l'une des revendications 1 ou 9 à 12, **caractérisé en ce que** le siloxane est choisi dans le groupe constitué de 1,3-bis(2-aminoéthylaminoéthyl) tétraméthyldisiloxane, 1,3-bis(glycidoxypropyl)tétraméthyldisiloxane, tris(glycidoxypropyldiméthylsiloxy)phénylsilane, 3-méthacryloxypropylpentaméthyldisiloxane, poly(acryloxypropylméthyl)siloxane, 1,3-bis-[(acryloxypropylméthyl)siloxane, 1,3-bis(3-méthacryloxypropyl)tétrakis-(triméthylsiloxy)disiloxane, 1,3-bis(3-méthacryloxypropyl)tétra-méthyldisiloxane, polydiméthylsiloxane à terminaison monométhacryloxypropyle, poly[diméthylsiloxane-co-(3-(monométhacryloxy)propyl)méthylsiloxane], 1,3,-bis (4-méthacryloxybutyl)-tétraméthyldisiloxane, copolymère de (méthacryloxypropyl)méthylsiloxane-diméthylsiloxane, dodécaméthylpentasiloxane, 1,1,1,3,5,7,7,7-octaméthyl-3,5-bis (triméthylsilanyloxy)tétrasiloxane, poly(méthylhydrosiloxane) à terminaison triméthylsilyle, poly(diméthylsiloxane) à terminaison bis (hydroxyalkyle), poly[diméthylsiloxane-co-(2-(3,4-époxycyclohexyl)éthyl)méthylsiloxane], poly(diméthylsiloxane) à terminaison diglycidyléther, poly[diméthylsiloxane-co-[3-(2-(3-hydroxyéthoxy)éthoxy)propyl]méthylsiloxane et poly(diméthylsiloxane) à terminaison monoglycidyléther.

**14.** Système de résine à plusieurs composants selon l'une des revendications 1 ou 9 à 13, **caractérisé en ce que** la proportion de siloxane va de 0,5 à 20 % en poids, par rapport au poids total du système de résine à plusieurs composants.

**15.** Système de résine à plusieurs composants selon l'une des revendications précédentes, **caractérisé en ce que** le composant isocyanate et le composant amine comprennent tous deux au moins un matériau de remplissage et au moins un additif rhéologique.

**16.** Système de résine à plusieurs composants selon la revendication 15, **caractérisé en ce que le** niveau de remplissage du composant isocyanate et le niveau de remplissage du composant amine vont de 10 à 70 % en poids, respectivement par rapport au poids total du composant isocyanate ou du composant amine.

**17.** Système de résine à plusieurs composants selon l'une des revendications précédentes, **caractérisé en ce que** le composant isocyanate et le composant amine sont présents dans un rapport quantitatif dans lequel le rapport d'équivalence des groupes NCO aux groupes amine réactifs vis-à-vis des groupes NCO est compris entre 0,3 et 2,0.

**18.** Système de résine à plusieurs composants selon l'une des revendications précédentes, **caractérisé en ce que** le composant isocyanate comprend au moins un polyisocyanate aromatique choisi dans le groupe constitué de diisocyanate de 1,4-phénylène, diisocyanate de 2,4- et/ou 2,6-toluylène, diisocyanate de xylylène, diisocyanate de xylylène hydrogéné, diisocyanate de tétraméthylxylylène, diisocyanate de 1,5-naphtylène, 2,4'- et/ou -4,4'-diisocyanate de diphénylèneméthane, 4,4',4"-triisocyanate de triphénylméthane, bis- et tris-(isocyanatoalkyl)-benzène, -toluène et -xylène ainsi que des mélanges de ceux-ci.

**19.** Système de résine à plusieurs composants selon l'une des revendications 1 à 17, **caractérisé en ce que** le composant isocyanate comprend au moins un polyisocyanate aliphatique choisi dans le groupe constitué de diisocyanate d'hexaméthylène (HDI), triméthyl-HDI (TMDI), diisocyanate de pentane (PDI), 1,5-diisocyanate de 2-méthylpentane (MPDI), diisocyanate d'isophorone (IPDI), 1,3- et 1,4-bis(isocyanatométhyl)cyclohexane ($H_6$XDI), bis(isocyanatométhyl)norbornane (NBDI), 3(4)-isocyanatométhyl-1-méthyl-cyclohexylisocyanate (IMCI) et 4,4'-bis(isocyanatocyclohexyl)méthane ($H_{12}$MDI) et des mélanges de ceux-ci.

**20.** Système de résine à plusieurs composants selon l'une des revendications précédentes, **caractérisé en ce que** le niveau de remplissage total se situe dans une plage allant de 35 à 65 % en poids par rapport au poids total du système de résine à plusieurs composants.

**21.** Système de résine à plusieurs composants selon l'une des revendications précédentes, **caractérisé en ce que** l'amine réactive vis-à-vis des groupes isocyanate est choisie dans le groupe constitué de 4,4'-méthylène-bis[N-(1-méthylpropyl)phénylamine], un mélange d'isomères de 6-méthyl-2,4-bis(méthylthio)phénylène-1,3-diamine et 2-méthyl-4,6-bis(méthylthio)phénylène-1,3-diamine (Ethacure 300), 4,4'-méthylènebis(2,6-diéthylaniline), 4,4'-méthylènebis(N-sec-butylcyclohexanamine) (Clearlink 1000), 3,3'-diaminodiphénylsulfone (Dapson), N,N'-di-sec-butyl-p-phénylènediamine et 2,4,6-triméthyl-m-phénylènediamine, ainsi que des mélanges de ceux-ci.

**22.** Système de résine à plusieurs composants selon l'une des revendications précédentes, **caractérisé en ce que** le système de résine à plusieurs composants est un système de résine à deux composants.

**23.** Masse de mortier préparée en mélangeant le composant isocyanate et le composant amine du système de résine à plusieurs composants selon l'une des revendications précédentes.

**24.** Procédé permettant la fixation chimique d'éléments de construction dans des trous de forage, dans lequel une masse de mortier selon la revendication 23 ou un système de résine à plusieurs composants selon l'une des revendications 1

à 22 est utilisé(e) pour la fixation chimique.

**25.** Utilisation d'une masse de mortier selon la revendication 23 ou d'un système de résine à plusieurs composants selon l'une des revendications 1 à 22 pour l'amélioration des valeurs d'arrachement d'une cheville chimique.

**26.** Utilisation selon la revendication 25 pour l'amélioration de la résistance à l'arrachement dans des trous de forage nettoyés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3447078 A1
- WO 2011113533 A1
- DE 102015109125 A1


### In der Beschreibung aufgeführte Nicht-Patentliteratur


- **A. D. MCNAUGHT** ; **A. WILKINSON**. IUPAC Compendium of Chemical Terminology. Blackwell Scientific Publications, 1997
- *CHEMICAL ABSTRACTS*, 61417-49-0
- *CHEMICAL ABSTRACTS*, 61548-33-2
- *CHEMICAL ABSTRACTS*, 61417-55-8
- *CHEMICAL ABSTRACTS*, 65345-34-8
- *CHEMICAL ABSTRACTS*, 61436-48-4
- *CHEMICAL ABSTRACTS*, 68585-78-4
- *CHEMICAL ABSTRACTS*, 65380-84-9
- *CHEMICAL ABSTRACTS*, 68585-67-1
- *CHEMICAL ABSTRACTS*, 68585-68-2
- *CHEMICAL ABSTRACTS*, 64157-14-8